(19) Europäisches Patentamt / European Patent Office / Office européen des brevets

(11) **EP 4 583 369 A1**

(12) **EUROPEAN PATENT APPLICATION**
published in accordance with Art. 153(4) EPC

(43) Date of publication:
**09.07.2025 Bulletin 2025/28**

(21) Application number: **22957296.1**

(22) Date of filing: **29.08.2022**

(51) International Patent Classification (IPC):
***H02K 3/26*** *(2006.01)*

(52) Cooperative Patent Classification (CPC):
**H02K 3/26**

(86) International application number:
**PCT/JP2022/032368**

(87) International publication number:
**WO 2024/047692 (07.03.2024 Gazette 2024/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ibiden Co., Ltd.**
**Ogaki-shi, Gifu-ken 503-0917 (JP)**

(72) Inventors:
• **MORITA, Haruhiko**
**Ogaki-shi, Gifu 503-0027 (JP)**
• **MIWA, Hitoshi**
**Ogaki-shi, Gifu 503-0027 (JP)**

• **KATO, Shinobu**
**Ogaki-shi, Gifu 503-0027 (JP)**
• **YOKOMAKU, Toshihiko**
**Ogaki-shi, Gifu 503-8503 (JP)**
• **KATO, Hisashi**
**Ogaki-shi, Gifu 503-0027 (JP)**
• **HIRASAWA, Takahisa**
**Ogaki-shi, Gifu 503-8503 (JP)**
• **MURAKI, Tetsuya**
**Ogaki-shi, Gifu 503-0027 (JP)**
• **FURUNO, Takayuki**
**Ogaki-shi, Gifu 503-0027 (JP)**

(74) Representative: **Hoefer & Partner Patentanwälte mbB**
**Pilgersheimer Straße 20**
**81543 München (DE)**

(54) **COIL SUBSTRATE, AND COIL SUBSTRATE FOR MOTOR**

(57)     [Problem] The purpose of the present invention is to provide a coil substrate having a high space factor.

[Solution] A coil substrate 10 according to the present embodiment has a flexible substrate 22 that has one end 22L and another end 22R, and a coil C that is formed on the flexible substrate 22. At least three coils C partially overlap one another.

[Fig. 4]

EP 4 583 369 A1

## Description

### Technical Field

The present invention relates to a coil board and a motor coil board.

### Background Art

Patent Document 1 describes a motor coil board comprising a flexible insulating board and coils.

### Prior Art Documents

### Patent Documents

Patent Document 1: JP 2019-140762 A

### Summary of the Invention

[Problems in the Patent Document]

Fig. 5 of Patent Document 1 shows a coil arrangement. According to fig. 5 of Patent Document 1, a coil C1 and a coil C2 partially overlap. The coil C1 and a coil C3 do not overlap. It is therefore considered difficult to increase the coil space factor by using the technology in Patent Document 1.
A flexible insulating board is wound in the motor coil board of Patent Document 1. The number of times of winding the flexible insulating board is greater than one rotation. The motor coil board of Patent Document 1 is therefore considered to include at least: a first-round flexible insulating board (first flexible insulating board), and a second-round flexible insulating board (second flexible insulating board) which is wound on the outside of the first flexible insulating board. An initial portion of the second flexible insulating board extends from a final portion of the first flexible insulating board. The second flexible insulating board is wound around the first flexible insulating board. When the flexible insulating board is wound so that the shape of the flexible insulating board is cylindrical, it is considered that a distance between the center of the cylinder and the initial portion of the first flexible insulating board is different from a distance between the center of the cylinder and the final portion of the first flexible insulating board. In the technology of Patent Document 1, it is considered that positions of the coils formed on the initial portion of the first flexible insulating board do not match positions of the coils formed on the initial portion of the second flexible insulating board. When a motor is formed by using the technology of Patent Document 1, it is considered difficult to provide a high-performance motor.

### Means for Solving the Problems

A coil board according to the present invention comprises: a flexible board including a first flexible board having one end, and a second flexible board extending from the first flexible board; and a plurality of coils formed on the flexible board. The coils are then arranged substantially in one row; the coils include: an mth coil, an (m+1)th coil, an (m+2)th coil, an (m+3)th coil, and an (m+4)th coil; the (m+1)th coil is positioned following the mth coil, the (m+2)th coil is positioned following the (m+1)th coil, the (m+3)th coil is positioned following the (m+2)th coil, and the (m+4)th coil is positioned following the (m+3)th coil; the mth coil, the (m+1)th coil, and the (m+2)th coil partially overlap, and the mth coil and the (m+4)th coil do not overlap. m is a natural number.

[Effects of the Embodiment]

The coil board according to an embodiment of the present invention is formed by: a flexible board including a first flexible board and a second flexible board extending from the first flexible board; and a plurality of coils formed on the flexible board. An mth coil, an (m+1)th coil, and an (m+2)th coil then partially overlap. According to the embodiment, at least three coils overlap. It is therefore possible to increase the coil space factor.
A motor coil board can be produced by winding the coil board of the embodiment. The second flexible board is wound around the first flexible board. The first flexible board forms a first round, and the second flexible board forms a second round. The coils on the first flexible board constitute inner coils, and the coils on the second flexible board constitute outer coils. The number of inner coils (first number) and the number of outer coils (second number) are plural numbers, and the first number and the second number are the same. The inner coils comprise an initial inner coil closest to said one end of the first flexible board and a final inner coil closest to the second flexible board. The final inner coil has a second width, and the initial inner coil has a first width. The second width is then greater than the first width. The length of the first flexible board can be adjusted by adjusting the second width. The positions of the coils within the motor coil board can be adjusted by adjusting the second width. According to the embodiment, the positions of the inner coils and the positions of the outer coils can be matched with high precision. A high-performance motor coil board can be provided.

**Brief Description of the Drawings**

[Fig. 1] Fig. 1(A) is a schematic diagram of a motor according to an embodiment, fig. 1(B) is a schematic diagram of a motor coil board according to an embodiment, fig. 1(C) is a plan view of wires, fig. 1(D) is a schematic diagram of a coil, and fig. 1(E) is a view in cross section of the coil.
[Fig. 2] is a view in cross section of inner coils.
[Fig. 3] is a schematic diagram showing a cross section of the motor coil board according to an embodiment.
[Fig. 4] Fig. 4(A) is a plan view of a coil board according to an embodiment, and fig. 4(B) shows a partial cross section of the circumference of an imaginary circle and the motor coil board.

**Embodiment of the Invention**

[Embodiment]

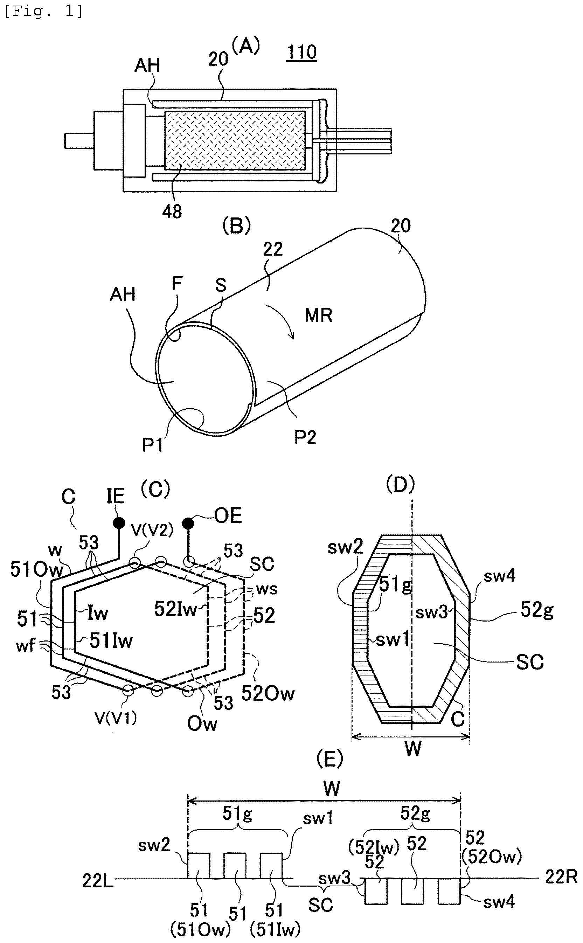

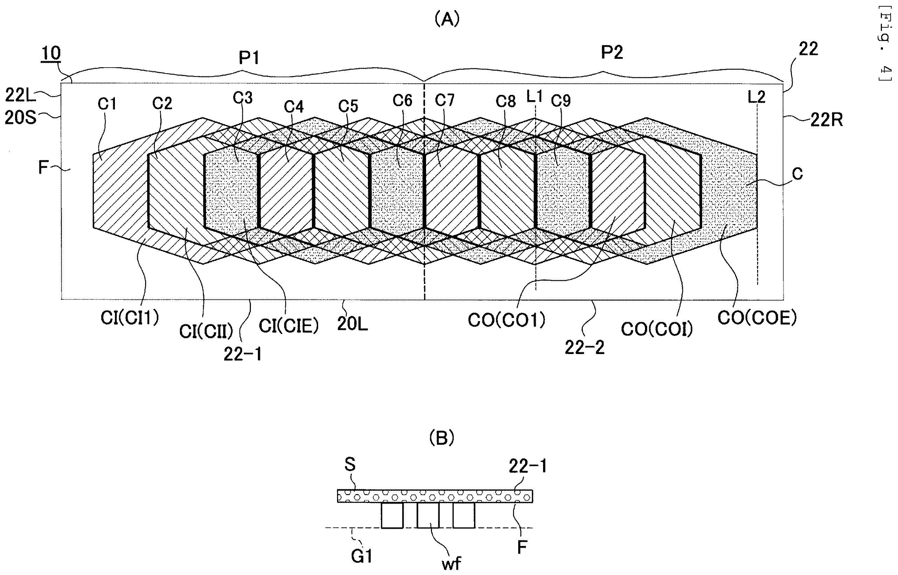

A coil board 10 illustrated in fig. 4(A) is prepared. The coil board 10 is formed by: a flexible board 22 having a first face F and a second face S on the opposite side to the first face F; and coils C (C1-C9) on the flexible board 22. The flexible board 22 has one end 22L and another end 22R. The coils C in fig. 4 are schematically depicted. A motor coil board 20 shown in fig. 1(B) is obtained by winding the coil board 10. The coil board 10 is wound in a cylindrical shape, for example. The motor coil board 20 is wound around a hollow AH. The coil board 10 is wound so that the first face F faces the hollow AH. The motor coil board 20 has a cylindrical shape, for example. A number of times N of winding is 2-5. Fig. 1(B) is a schematic diagram.

As shown in fig. 1(A), a motor 110 is obtained by arranging a magnet 48 inside the motor coil board 20. Fig. 1(A) is a schematic diagram. The motor coil board 20 is disposed around the magnet 48 with the hollow AH therebetween. A brushless motor is an example of the motor 110. The magnet 48 rotates in the embodiment, but the motor coil board 20 may equally rotate.

Fig. 1(C) shows an example of the coil C. The coil C is formed by a central space SC and wires w surrounding the central space SC. The wires w have an output part OE and an input part IE. The wires w are formed between the output part OE and the input part IE. The wires w forming the coil C are formed in a spiral shape. The central space SC is enclosed within the wires w forming the coil C by an innermost wire Iw. An outermost wire w constitutes an outside wire Ow. The wires w forming the coil C are formed around the central space SC.

The wires w forming the coil C in fig. 1(C) are depicted by solid lines, broken lines and circles. The solid lines denote wires on the first face F (first-face wires) wf. The broken lines denote wires on the second face S (second-face wires) ws. The circles denote via conductors V. The via conductors V connect the first-face wires wf and the second-face wires ws. The via conductors V include: a first via conductor V1 joining the first-face wire wf and the second-face wire ws within one turn; and a second via conductor V2 connecting different turns. One first-face wire wf, one first via conductor V1, and one second-face wire ws form one turn.

As shown in fig. 1(C), the wires w include a plurality of first wires 51 and a plurality of second wires 52 facing each other across the central space SC. Within one coil C, the first wires 51 are close to said one end 22L and the second wires 52 are close to said other end 22R. The first wires 51 are each formed roughly parallel to each other. The second wires 52 are each formed roughly parallel to each other. That is to say, the first wires 51 and the second wires 52 are formed roughly parallel to each other. When the motor 110 is produced using the coil board 10 of the embodiment, an angle between a rotation direction MR of the motor shown in fig. 1(B) and the first wires 51 is approximately 90°. An angle between an orientation of the current flowing through the first wires 51 and the rotation direction MR of the motor is approximately 90°. The wires w further comprise third wires 53 joining the first wires 51 and the second wires 52.

The first wire 51 positioned furthest to the outside among the plurality of first wires 51 constitutes an outside first wire 51Ow. The innermost wire among the plurality of first wires 51 constitutes an inside first wire 51Iw. The inside first wire 51Iw faces the central space SC.

The second wire 52 positioned furthest to the outside among the plurality of second wires 52 constitutes an outside second wire 52Ow. The innermost second wire 52 among the plurality of second wires 52 constitutes an inside second wire 52Iw. The inside second wire 52Iw faces the central space SC.

Fig. 1(E) is a cross section of one coil C. Fig. 1(E) shows a cross section of the first wires 51 and the second wires 52.

Fig. 1(D) schematically shows the coil C. The wires w are gathered together in fig. 1(D). The wires w form a wire group when gathered together. A first wire group 51g is formed by gathering the first wires 51. The first wire group 51g is formed by gathering all of the first wires 51. A second wire group 52g is formed by gathering the second wires 52. The second wire group 52g is formed by gathering all of the second wires 52. The coil C is depicted using the wire groups in fig. 1(D). The wire group on the first face F is depicted by horizontal lines. The wire group on the second face S is depicted by diagonal lines. The coils C in fig. 4(A) are depicted by the wire groups.

As shown in fig. 4(A), the flexible board 22 has a short side 20S and a long side 20L. The flexible board 22 has one end 22L and another end 22R on the opposite side to said one end 22L. The short side 20S also serves as said one end 22L. The coils C (C1-C9) are arranged along the long side 20L of the flexible board 22. The coils C are arranged substantially in one row from said one end 22L to said other end 22R of the flexible board 22. The coil C closest to said one end 22L constitutes a first coil C1. The first coil C1 is followed by a second coil C2. The second coil C2 is followed by a third coil C3. The third coil C3 is followed by a fourth coil C4. The fourth coil C4 is followed by a fifth coil C5. An (m+1)th coil is thus positioned following an mth coil. An (m+2)th coil is positioned following the (m+1)th coil. An (m+3)th coil is positioned following the (m+2)th coil. An (m+4)th coil is positioned following the (m+3)th coil. The first coil C1, the second coil C2, and the third coil C3 partially overlap. The first coil C1 and the fifth coil C5 do not overlap. The mth coil, the (m+1)th coil, and the (m+2)th coil thus partially overlap. The mth coil and the (m+4)th coil do not overlap. Three coils C overlap in the embodiment. It is therefore possible to increase the coil space factor.

The first coil C1, the second coil C2, the third coil C3, and the fourth coil C4 partially overlap. The first coil C1 and the fifth coil C5 do not overlap. The mth coil, the (m+1)th coil, the (m+2)th coil, and the (m+3)th coil thus partially overlap. The mth coil and the (m+4)th coil do not overlap. Four coils C overlap in the embodiment. It is therefore possible to increase the coil space factor.

The mth coil is close to said one end 22L and the (m+1)th coil is close to said other end 22R. m is a natural number.

The first coil C1 constitutes a U-phase coil. The second coil C2 constitutes a V-phase coil. The third coil C3 constitutes a W-phase coil. The U-phase coil, the V-phase coil, and the W-phase coil are arranged in the order of U-phase coil, V-phase coil, W-phase coil, with the coil C closest said one end 22L being the U-phase coil. The number of coils C is a multiple of 3. There are nine coils in the example in fig. 4(A).

The coil board 10 is formed by one flexible board 22. The flexible board 22 forming the coil board 10 is divided into a plurality of portions P. The coil board 10 is therefore also divided into a plurality of portions P. The coil board 10 is formed by the plurality of portions P and the number of portions P is N. The portions P forming the coil board 10 are arranged in a row from said one end 22L to said other end 22R. A first portion P1 includes said one end 22L of the flexible board 22. A second portion P2 is next to the first portion P1. N is the number of times of winding the flexible board 22, for example. An Nth portion PN includes said other end 22R of the flexible board 22.

There are two portions P in the example in fig. 4 (A). The coil board 10 in fig. 4(A) is formed by the first portion P1 and the second portion P2. The flexible board 22 forming the first portion P1 is a first flexible board 22-1. The flexible board 22 forming the second portion P2 is a second flexible board 22-2. The second flexible board 22-2 extends from the first flexible board 22-1.

As shown in fig. 4(A), the coils C include: coils C formed within the first flexible board 22-1, coils C formed within the second flexible board 22-2, and coils formed on both regions of the first flexible board 22-1 and the second flexible board 22-2.

The coils C formed within the first flexible board 22-1 are referred to as inner coils CI. For the inner coils CI, the whole of the coils C is formed within the first flexible board 22-1. The number of inner coils CI (first number) is a plural number. Among the inner coils CI, the coil C closest to said one end 22L is an initial inner coil CI1. Among the inner coils CI, the coil C closest to the second flexible board 22-2 is a final inner coil CIE. The inner coils CI include an intermediate inner coil CII between the initial inner coil CI1 and the final inner coil CIE. The number of intermediate inner coils CII is 1 or 4.

In the example of fig. 4(A), the first number is 3 and the number of intermediate inner coils CII is 1. The initial inner coil CI1, the intermediate inner coil CII, and the final inner coil CIE are formed on the first flexible board 22-1. The first coil C1 constitutes the initial inner coil CI1. The second coil C2 constitutes the intermediate inner coil CII. The third coil C3 constitutes the final inner coil CIE.

The coils C formed on the second flexible board 22-2 are referred to as outer coils CO. For the outer coils CO, the whole of the coils C is formed within the second flexible board 22-2. The number of outer coils CO (second number) is a plural number. The first number and the second number are the same. Among the outer coils CO, the coil C closest to the first flexible board 22-1 constitutes an initial outer coil CO1. Among the outer coils CO, the coil C closest to said other end 22R constitutes a final outer coil COE. The outer coils CO include an intermediate outer coil COI between the initial outer coil CO1 and the final outer coil COE. The number of intermediate outer coils COI is 1 or 4. A seventh coil C7 constitutes the initial outer coil CO1. An eighth coil C8 constitutes the intermediate outer coil COI. A ninth coil C9 constitutes the final outer coil COE.

In the example in fig. 4(A), the second number is 3, and the number of intermediate outer coils COI is 1. The initial outer coil CO1, the intermediate outer coil COI, and the final outer coil COE are formed on the second flexible board 22-2.

The coils C have a distance (width) W shown in fig. 1(D) and fig. 1(E). The first wires 51 comprise a first side wall sw1 facing the central space SC, and a second side wall sw2 on the opposite side to the first side wall sw1. The second wires 52 comprise a third side wall sw3 facing the central space SC, and a fourth side wall sw4 on the opposite side to the third side wall sw3. Among the wires w forming one coil C, a distance between the second side wall sw2 of an outside first wire 510w and the fourth side wall sw4 of an outside second wire 520w constitutes the width W. Alternatively, the width W is measured along a straight line perpendicular to the first wires 51. Alternatively, the width W is measured along the long side 20L of the flexible board 22. Alternatively, two straight lines (first straight line L1 and second straight line L2) are prepared on the coil board 10 shown in fig. 4(A). The first straight line L1 and the second straight line L2 are parallel. An angle between the first straight line L1 and the rotation direction MR of the motor 110 is approximately 90°. The coils C are bounded between the first straight line L1 and the second straight line L2. A distance between the first straight line L1 and the second straight line L2 bounding the coils C constitutes the width W of the coils C. The initial inner coil CI1 has a first width w1. The intermediate inner coil CII has the first width w1. The final inner coil CIE has a second width w2. For example, when the initial inner coil CI1 is bounded by the first straight line L1 and the second straight line L2, the distance between the first straight line L1 and the second straight line L2 is the first width w1. When the final inner coil CIE is bounded between the first straight line L1 and the second straight line L2, the distance between the first straight line L1 and the second straight line L2 is the second width w2. When the intermediate inner coil CII is bounded between the first straight line L1 and the second straight line L2, the distance between the first straight line L1 and the second straight line L2 is the first width w1.

A central space SP of each coil C has a width. The width of the central space SP constitutes a distance between the first side wall sw1 of the inside first wire 51Iw and the third side wall sw3 of the inside second wire 52Iw. Alternatively, the width is measured by bounding the central space SP between a first straight line and a second straight line. The distance between the first straight line and the second straight line constitutes the width of the central space SP.

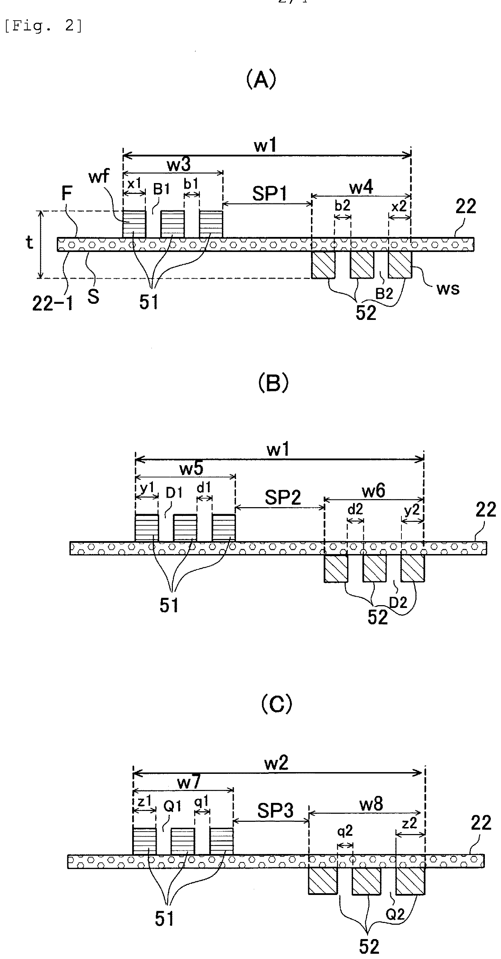

Fig. 2 shows the width W of the initial inner coil CI1, the width W of the intermediate inner coil CII, and the width W of the final inner coil CIE. The width (first width w1) of the initial inner coil CI1 and the width (first width w1) of the intermediate inner coil CII are substantially equal. The width (second width w2) of the final inner coil CIE is greater than the first width w1.

Fig. 2(A) shows a cross section of the initial inner coil CI1. Fig. 2(B) shows a cross section of the intermediate inner coil CII. Fig. 2(C) shows a cross section of the final inner coil CIE. The cross sections of the first wires 51 and the second wires 52 are shown in these drawings.

The first wires 51 forming the initial inner coil CI1 have a width (11th width) x1. The widths x1 of the first wires 51 within the initial inner coil CI1 are substantially equal.

Spaces B1 are formed between adjacent first wires 51 within the initial inner coil CI1. The spaces B1 have a width b1. The widths (21st widths) b1 of the spaces B1 within the initial inner coil CI1 are substantially equal. The second wires 52 forming the initial inner coil CI1 have a width (12th width) x2. The widths x2 of the second wires 52 within the initial inner coil CI1 are substantially equal.

Spaces B2 are formed between adjacent second wires 52 within the initial inner coil CI1. The spaces B2 have a width (22nd width) b2. The widths b2 of the spaces B2 within the initial inner coil CI1 are substantially equal.

The first wires 51 forming the intermediate inner coil CII have a width (13th width) y1. The widths y1 of the first wires 51 within the intermediate inner coil CII are substantially equal.

Spaces D1 are formed between adjacent first wires 51 within the intermediate inner coil CII. The spaces D1 have a width (23rd width) d1. The widths d1 of the spaces D1 within the intermediate inner coil CII are substantially equal.

The second wires 52 forming the intermediate inner coil CII have a width (14th width) y2. The widths y2 of the second wires 52 within the intermediate inner coil CII are substantially equal.

Spaces D2 are formed between adjacent second wires 52 within the intermediate inner coil CII. The spaces D2 have a width (24th width) d2. The widths d2 of the spaces D2 within the intermediate inner coil CII are substantially equal.

The first wires 51 forming the final inner coil CIE have a width (15th width) z1. The widths z1 of the first wires 51 within the final inner coil CIE are substantially equal.

Spaces Q1 are formed between adjacent first wires 51 within the final inner coil CIE. The spaces Q1 have a width (25th width) q1. The widths q1 of the spaces Q1 within the final inner coil CIE are substantially equal. The second wires 52 forming the final inner coil CIE have a width (16th width) z2. The widths z2 of the second wires 52 within the final inner coil CIE are substantially equal.

Spaces Q2 are formed between adjacent second wires 52 within the final inner coil CIE. The spaces Q2 have a width (26th width) q2. The widths q2 of the spaces Q2 within the final inner coil CIE are substantially equal.

The 11th width x1, the 12th width x2, the 13th width y1, the 14th width y2, and the 15th width z1 are substantially equal. The 16th width z2 is greater than the 11th width x1.

The 21st width b1, the 22nd width b2, the 23rd width d1, the 24th width d2, the 25th width q1, and the 26th width q2 are substantially equal.

A width SP1 of the central space SP of the initial inner coil CI1, a width SP2 of the central space SP of the intermediate inner coil CII, and a width SP3 of the central space SP of the final inner coil CIE are substantially equal.

By virtue of these relationships, the width w2 of the final inner coil CIE can be made greater than the width w1 of the initial inner coil CI1. The width w2 of the final inner coil CIE can be made greater than the width w1 of the intermediate inner coil CII. The width w2 of the final inner coil CIE is adjusted by adjusting the 16th width z2. The width w1 of the initial inner coil CI1 and the width w1 of the intermediate inner coil CII can be made substantially equal.

The first wire group 51g has a width. The width of the first wire group 51g constitutes a distance between the second side wall sw2 of the outside first wire 510w and the first side wall sw1 of the inside first wire 51lw. Alternatively, the width of the first wire group 51g is measured along a straight line perpendicular to the first wires 51. Alternatively, the width is measured by bounding the first wire group 51g between the first straight line L1 and the second straight line L2. The distance between the first straight line L1 and the second straight line L2 constitutes the width of the first wire group 51g.

The second wire group 52g has a width. The width of the second wire group 52g constitutes a distance between the fourth side wall sw4 of the outside second wire 520w and the third side wall sw3 of the inside second wire 52lw. Alternatively, the width of the second wire group 52g is measured along a straight line perpendicular to the first wires 51. Alternatively, the width is measured by bounding the second wire group 52g between the first straight line L1 and the second straight line L2. The distance between the first straight line L1 and the second straight line L2 constitutes the width of the second wire group 52g.

As shown in fig. 2(A), the first wire group 51g of the initial inner coil CI1 has a first wire group width (31st width) w3. The second wire group 52g of the initial inner coil CI1 has a second wire group width (32nd width) w4.

As shown in fig. 2(B), the first wire group 51g of the intermediate inner coil CII has a first wire group width (33rd width) w5. The second wire group 52g of the intermediate inner coil CII has a second wire group width (34th width) w6.

As shown in fig. 2(C), the first wire group 51g of the final inner coil CIE has a first wire group width (35th width) w7. The second wire group 52g of the final inner coil CIE has a second wire group width (36th width) w8.

The 31st width w3, the 32nd width w4, the 33rd width w5, the 34th width w6, and the 35th width w7 are substantially equal. The 36th width w8 is greater than the 31st width w3.

A width SP1 of the central space SP of the initial inner coil CI1, a width SP2 of the central space SP of the intermediate inner coil CII, and a width SP3 of the central space SP of the final inner coil CIE are substantially equal.

By virtue of these relationships, the width w2 of the final inner coil CIE can be made greater than the width w1 of the initial inner coil CI1. The width w2 of the final inner coil CIE is adjusted by adjusting the 36th width w8. The width w2 of the final inner coil CIE can be made greater than the width w1 of the intermediate inner coil CII. The width w1 of the initial inner coil CI1 and the width w1 of the intermediate inner coil CII can be made substantially equal.

The motor coil board 20 of the embodiment is obtained by winding the coil board 10. The coil board 10 is wound so that each portion P roughly forms one round. An example of the manner of winding the coil board 10 will be described with the aid of fig. 1(B). When the coil board 10 in fig. 4(A) is wound, the first portion P1 roughly forms one round. The second portion P2 which is joined to the first portion P1 roughly forms one round. As shown in fig. 1(B), the first portion P1 is wound on the inside. The first portion P1 forms a first round. The flexible board 22 forming the first portion P1 is the first flexible board 22-1. The second portion P2 is wound outside the first portion P1. The second portion P2 forms a second round. The flexible board 22 forming the second portion P2 is the second flexible board 22-2.

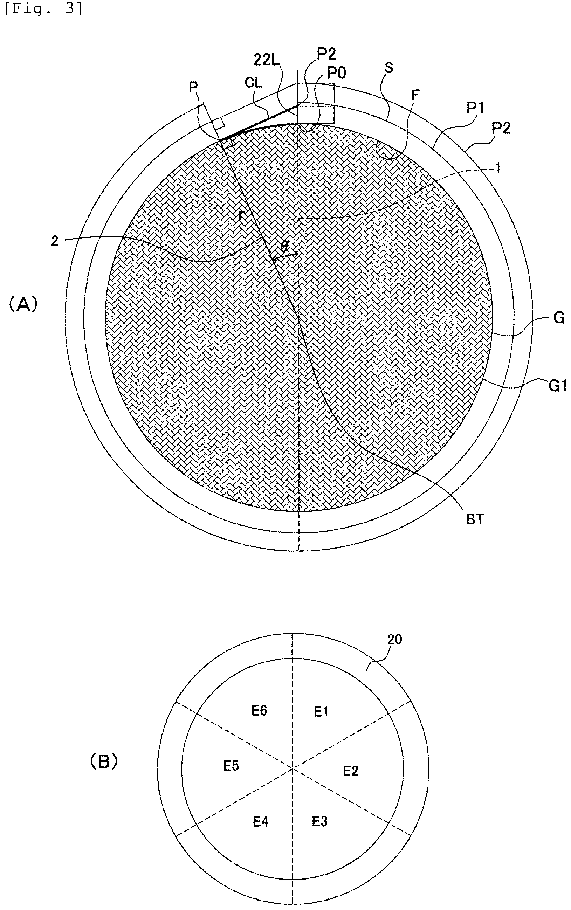

Fig. 3(B) schematically shows a cross section of the motor coil board 20. In fig. 3(B), the motor coil board 20 is cut on a plane parallel to the rotation direction MR of the motor 110. As shown in fig. 3(B), the motor coil board 20 can be divided into equal areas. The first wire group 51g or the second wire group 52g is disposed in each area. Alternatively, the first wire group 51g and the second wire group 52g are disposed in each area. In that case, a first wire group 51g and a second wire group 52g of the same phase are disposed in one area. For example, a first wire group 51g forming the U-phase coil and a second wire group 52g forming the U-phase coil are provided. When multiple wire groups are disposed in one area, the wire groups disposed within that one area form different coils C. A first wire group 51g and a second wire group 52g within one coil C are not disposed in one area. A first wire group 51g and a second wire group 52g within one coil C are not disposed in the same area.

In fig. 3(B), the motor coil board 20 is divided into six areas. A center angle of each area is substantially 60°. The area between 0° and 60° constitutes a first area E1. The area between 60° and 120° constitutes a second area E2. A third area E3 is next to the second area E2. A fourth area E4 is next to the third area E3. A fifth area E5 is next to the fourth area E4. A sixth area E6 is next to the fifth area E5. The first wire group 51g of the first coil C1, the second wire group 52g of the fourth coil C4, and the first wire group 51g of the seventh coil C7 are disposed in the first area E1. The first wire group 51g of the second coil C2, the second wire group 52g of the fifth coil C5, and the first wire group 51g of the eighth coil C8 are disposed in the second area E2. The first wire group 51g of the third coil C3, the second wire group 52g of the sixth coil C6, and the first wire group 51g of the ninth coil C9 are disposed in the third area E3. The second wire group 52g of the first coil C1, the first wire group 51g of the fourth coil C4, and the second wire group 52g of the seventh coil C7 are disposed in the fourth area E4. The second wire group 52g of the second coil C2, the first wire group 51g of the fifth coil C5, and the second wire group 52g of the eighth coil C8 are disposed in the fifth area E5. The second wire group 52g of the third coil C3, the first wire group 51g of the sixth coil C6, and the second coil group 52g of the ninth coil C9 are disposed in the sixth area E6.

A board comprising a first-round board and a second-round board, and a circle r having a radius R are prepared.

Coils are formed on the first-round board. Coils are formed on the second-round board. The length of the first-round board and the length of the second-round board are $2\pi R$. The first-round board extends from a start portion to an end portion. The second-round board extends from the start portion to an end portion. The end portion of the first-round board coincides with the start portion of the second-round board. The board is wound so that the second-round board is wound around the first-round board. Here, the board is wound so that the first-round board is positioned on the circumference of the circle r. The second-round board is then wound around the first-round board. The second-round board is therefore not positioned on the circumference of the circle r. The second-round board is positioned outside the circumference of the circle r. The start portion of the second-round board is therefore not positioned directly above the start portion of the first-round board. Accordingly, it is difficult to match the positions of the coils on the first-round board with the positions of the coils on the second-round board.

According to the coil board 10 of the embodiment, the width (second width w2) of the final inner coil CIE is greater than the width (first width w1) of the initial inner coil CI1. The length of the first flexible board 22-1 is adjusted as a result. Consequently, even if the second flexible board 22-2 is wound around the first flexible board 22-1, in the same way as in Patent Document 1, the position of the initial inner coil CI1 and the position of the initial outer coil CO1 can be matched with high precision. The position of the intermediate inner coil CII and the position of the intermediate outer coil COI can be matched with high precision. The position of the final inner coil CIE and the position of the final outer coil COE can be matched with high precision. A motor coil board 20 having a high space factor can be obtained.

The motor coil board 20 of the embodiment is cut on a plane including the rotation direction MR of the motor. The motor coil board 20 is cylindrical, for example. Fig. 3(A) shows an example of the shape of the cross section obtained by the cut. The shape shown in fig. 3(A) is substantially circular.

An imaginary circle G is depicted in fig. 3(A). The imaginary circle G has a radius r and a circumference G1. As shown in fig. 4(B), upper faces of the first-face wires wf of the first flexible board 22-1 are positioned on the circumference G1. The coil board forming the motor coil board 20 has a thickness t. As shown in fig. 2(A), the thickness t is the sum of the thickness of the first flexible board 22-1, the thickness of the first-face wires wf on the first flexible board 22-1, and the thickness of the second-face wires ws on the first flexible board 22-1. A point of intersection P0 of the circumference G1 and a line of extension of said one end 22L are shown in fig. 3(A). A point of intersection P2 of the line of extension of said one end 22L and a line of extension of upper faces of the second-face wires ws on the first flexible board 22-1 are shown in fig. 3(A). A straight line CL passing through the point of intersection P2 and touching the imaginary circle G is shown in fig. 3(A). The straight line CL and the imaginary circle G touch at a point P, as shown in fig. 3(A). The center BT of the imaginary circle G is shown in fig. 3(A). An angle $\theta$ between a straight line 1 passing through the point of intersection P0 and the center BT, and a straight line 2 passing through the point P and the center BT is shown in fig. 3.

A difference $\delta$ between the second width w2 and the first width w1 satisfies a relationship 1 which includes the radius r, the thickness t, and the angle $\theta$. The angle $\theta$ satisfies a relationship 2.

$$\text{Relationship 1: } \delta = (r+t)\sin\theta - 2\pi r\theta/360$$

$$\text{Relationship 2: } \theta = \cos^{-1}(r/(r+t))$$

The positions of the inside coils CI and the positions of the outside coils CO can be matched with high precision when the difference $\delta$ between the second width w2 and the first width w1 satisfies the relationship 1. The width w3 of the first wire group of the initial inner coil CII and the width w7 of the first wire group of the final inner coil CIE are equal. In addition, the width w8 of the second wire group of the final inner coil CIE is greater than the width w4 of the second wire group of the initial inner coil CI1. In this case, the difference $\delta$ between the width w8 of the second wire group of the final inner coil CIE and the width w4 of the second wire group of the initial inner coil CI1 satisfy the relationship 1.

An insulating film can be formed on the first face F of the flexible board 22 and the first-face wires wf. An insulating film can be formed on the second face S of the flexible board 22 and the second-face wires ws. When insulating films are formed, the coil board 10 comprises the insulating films. The thickness t includes the thicknesses of the insulating films, when the coil board 10 comprises these insulating films.

The widths W of the coils C are such that the inner coils CI and the outer coils CO have the same relationship. The width of the initial outer coil CO1 and the width of the intermediate outer coil COI are substantially equal. The width of the final outer coil COE is greater than the width of the initial outer coil CO1. The width of the final outer coil COE is adjusted by the width of the second wires 52 of the final outer coil COE. The width of the second wires 52 is greater than the width of the first wires 51 in the final outer coil COE. The width of the final outer coil COE is adjusted by the width of the second wire group 52g of the final outer coil COE. The width of the second wire group 52g is greater than the width of the first wire group 51g in the outer coil COE. The widths W of the coils C are adjusted by the same method for the inner coils CI and the outer coils C0.

# EP 4 583 369 A1

[Key to Symbols]

10: Coil board
20: Motor coil board
22: Flexible board
22-1: First flexible board
22-2: Second flexible board
48: Magnet
C: Coil

## Claims

1. A coil board comprising: a flexible board including a first flexible board having one end, and a second flexible board extending from the first flexible board; and

   a plurality of coils formed on the flexible board, wherein
   the coils are arranged substantially in one row; the coils include: an mth coil, an (m+1)th coil, an (m+2)th coil, an (m+3)th coil, and an (m+4)th coil; the (m+1)th coil is positioned following the mth coil, the (m+2)th coil is positioned following the (m+1)th coil, the (m+3)th coil is positioned following the (m+2)th coil, and the (m+4)th coil is positioned following the (m+3)th coil; the mth coil, the (m+1)th coil, and the (m+2)th coil partially overlap, and the mth coil and the (m+4)th coil do not overlap; and
   m is a natural number.

2. The coil board of claim 1, wherein the mth coil, the (m+1)th coil, the (m+2)th coil, and the (m+3)th coil partially overlap.

3. A motor coil board produced by winding the coil board of claim 1, wherein
   the second flexible board is wound around the first flexible board, the first flexible board forms a first round, the second flexible board forms a second round, the coils on the first flexible board constitute inner coils, the coils on the second flexible board constitute outer coils, the number of inner coils (first number) and the number of outer coils (second number) are plural numbers, the first number and the second number are the same, the inner coils comprise an initial inner coil closest to said one end and a final inner coil closest to the second flexible board, the coils each have a width, the width of the final inner coil constitutes a second width, the width of the initial inner coil constitutes a first width, and the second width is greater than the first width.

4. The motor coil board of claim 3, wherein the flexible board has a short side and a long side, the coils are arranged along the long side, and the width is measured along the long side.

5. The motor coil board of claim 3, wherein, when the motor coil board is disposed around a magnet, a motor is formed by the magnet and the motor coil board, two straight lines (first straight line and second straight line) perpendicular to a rotation direction of the motor are prepared, and when the final inner coil is bounded between the first straight line and the second straight line, a distance between the first straight line and the second straight line constitutes the second width, and when the initial inner coil is bounded between the first straight line and the second straight line, a distance between the first straight line and the second straight line constitutes the first width.

6. The motor coil board of claim 3, wherein the inner coils include an intermediate inner coil between the initial inner coil and the final inner coil, the width of the intermediate inner coil being substantially equal to the first width.

7. The motor coil board of claim 3, wherein each of the coils is formed by a central space and wires formed around the central space, the number of turns of the coils is a plural number, the wires include a plurality of first wires and a plurality of second wires, the first wires and the second wires face each other across the central space, the first wires are each substantially parallel to each other, the second wires are each substantially parallel to each other, the first wires and the second wires are substantially parallel, a first wire group is formed by all of the first wires, a second wire group is formed by all of the second wires, the first wire group has a first wire group width, the second wire group has a second wire group width, the first wire group width and the second wire group width are substantially equal in the initial inner coil, and the first wire group width and the second wire group width are different in the final inner coil.

8

8. The motor coil board of claim 3, wherein a number of times N of winding is 2-5.

9. The motor coil board of claim 3, wherein the coils are in three phases: a U-phase coil, a V-phase coil, and a W-phase coil.

10. The motor coil board of claim 7, wherein the second wire group width is greater than the first wire group width in the final inner coil.

11. The motor coil board of claim 7, wherein the inner coils include an intermediate inner coil between the initial inner coil and the final inner coil, the first wire group width and the second wire group width being substantially equal in the intermediate inner coil.

12. The motor coil board of claim 7, wherein the inner coils are disposed entirely within the first flexible board, and the outer coils are disposed entirely within the second flexible board.

13. The motor coil board of claim 7, wherein, when the motor coil board is disposed around a magnet, a motor is formed by the magnet and the motor coil board, and an angle between a rotation direction of the motor and the first wires is substantially 90°.

14. The motor coil board of claim 13, wherein the flexible board has a first face and a second face on the opposite side to the first face, the wires forming the coils include first-face wires formed on the first face and second-face wires formed on the second face, the first face faces the magnet when the coil board is wound, a cross section obtained by cutting the motor coil board on a plane parallel to the rotation direction of the motor and an imaginary circle are prepared, the imaginary circle and the motor coil board are disposed so that upper faces of the first-face wires formed on the first flexible board mostly lie over the circumference of the imaginary circle, and a difference ($\delta$) between the second width and the first width satisfies the following relationship 1.

$$\text{Relationship 1: } \delta = (r+t)\sin\theta - 2\pi r\theta/360$$

$$\text{Relationship 2: } \theta = \cos^{-1}(r/(r+t))$$

r in relationship 1 is the diameter of the imaginary circle, t in relationship 1 is the sum of the thickness of the flexible board, the thickness of the first-face wires, and the thickness of the second-face wires, and $\theta$ in relationship 1 is obtained from relationship 2.

15. The motor coil board of claim 14, further including an insulating film formed on the first flexible board and the inner coils, wherein the thickness t further includes the thickness of the insulating film.

[Fig. 1]

[Fig. 2]

(A)

(B)

(C)

[Fig. 3]

(A)

(B)

[Fig. 4]

(A)

(B)

EP 4 583 369 A1

## INTERNATIONAL SEARCH REPORT

| International application No. |
| --- |
| **PCT/JP2022/032368** |

**A.    CLASSIFICATION OF SUBJECT MATTER**

    *H02K 3/26*(2006.01)i
    FI:    H02K3/26 E

According to International Patent Classification (IPC) or to both national classification and IPC

**B.    FIELDS SEARCHED**

Minimum documentation searched (classification system followed by classification symbols)

    H02K3/26

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2022-36674 A (IBIDEN CO., LTD.) 08 March 2022 (2022-03-08) | 1-2 |
| | paragraphs [0009]-[0012], fig. 1-2 | |
| A | paragraphs [0009]-[0012], fig. 1-2 | 3-15 |
| Y | JP 2012-147622 A (SEIKO EPSON CORP.) 02 August 2012 (2012-08-02) | 1-2 |
| | fig. 2 | |
| Y | JP 6948748 B1 (CORELESS MOTOR CO., LTD.) 13 October 2021 (2021-10-13) | 1-2 |
| | fig. 8 | |
| Y | JP 52-153101 A (SANYO ELECTRIC CO., LTD.) 20 December 1977 (1977-12-20) | 1-2 |
| | fig. 7(b) | |

☐ Further documents are listed in the continuation of Box C.    ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **17 October 2022** | **08 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/032368**

| Patent document cited in search report | | | Publication date (day/month/year) | Patent family member(s) | Publication date (day/month/year) |
|---|---|---|---|---|---|
| JP | 2022-36674 | A | 08 March 2022 | US 2022/0060074 A1 paragraphs [0015]-[0021], fig. 1A-2B | |
| JP | 2012-147622 | A | 02 August 2012 | (Family: none) | |
| JP | 6948748 | B1 | 13 October 2021 | (Family: none) | |
| JP | 52-153101 | A | 20 December 1977 | (Family: none) | |

Form PCT/ISA/210 (patent family annex) (January 2015)

**REFERENCES CITED IN THE DESCRIPTION**

**Patent documents cited in the description**

- JP 2019140762 A